Europäisches Patentamt

European Patent Office

Office européen des brevets

(19)

(11) Publication number: **0 265 130**
**A2**

(12) # EUROPEAN PATENT APPLICATION

(21) Application number: 87308982.5

(22) Date of filing: 12.10.87

(51) Int. Cl.4: **H05G 1/64** , G01N 23/04

(30) Priority: 16.10.86 US 920128

(43) Date of publication of application:
27.04.88 Bulletin 88/17

(84) Designated Contracting States:
DE GB

(71) Applicant: PICKER INTERNATIONAL, INC.
595 Miner Road
Highland Heights Ohio 44143(US)

(72) Inventor: Bender, Norman E.
6445 Bryson Drive
Menton Ohio 44060(US)
Inventor: Tesic, Mike M.
3375 Alma Street
Palo Alto California 94306(US)
Inventor: Hansen, Timothy B.
8180 Belle Vernon Drive
Novelty Ohio 44072(US)

(74) Representative: Pope, Michael Bertram
Wingate
Central Patent Department Wembley Office
The General Electric Company, p.l.c. Hirst
Research Centre East Lane
Wembley Middlesex HA9 7PP(GB)

(54) Imaging systems.

(57) An imaging system of the x-ray type including a radiation source (10) and a panel electron image intensifier tube PET (18) is described. A gradient refractive index (GRIN) lens array (28) is positioned adjacent the output face (20) of the PET (18) such that the objective plane defined by the lens array (28) substantially coincides with the output face (20) of the PET (18). Means (26) is provided for supporting a portion of radiographic film such that the film surface substantially coincides with the image plane of the lens array (28).

Fig. 1

## Imaging Systems

This invention relates to imaging systems.

More particularly the invention relates to imaging systems of the kind wherein penetrative radiation is directed through an object to be imaged and the pattern of radiation emergent from the body is detected.

One example of such a system is a radiography system.

In a conventional radiography system, an x-ray source is caused to direct a divergent area beam of x-radiation through a patient. A cassette containing an x-ray sensitive phosphor screen and a film sensitive to light is positioned in the x-ray path on the side of a patient opposite the source. Radiation passing through the patient's body, is attenuated in varying degrees in accordance with the various types of tissue through which the x-rays pass. The attenuated x-rays from the patient emerge in a pattern, and strike the phosphor screen, which in turn produces light, exposing the film. The film is processed to yield a visible image which can be interpreted by a radiologist as defining internal body structure and/or condition of the patient.

Another type of diagnostic imaging system utilizing x-rays is fluoroscopy. In fluoroscopy, a real time substantially continuous image, rather than a radiograh, of the patient's internal body structure, is produced. The source directs x-rays through the patient's body which are received by a fluoro device located on the opposite side of the patient. The fluoro device includes known means for producing a continuous, real-time image of the emergent pattern of x-rays transmitted through the patient's body. In fluoroscopy, the x-ray source is operated at a lower radiation output level than in radiography. The output of the source in fluoroscopy, however, rather than being a single pulse, may be multiple pulses or continuous.

Known types of fluoroscopy devices employ a scintillation screen which responds to the incident pattern of x-rays to provide an directly visible image. Other types of fluoroscopic devices employ a inverter type image intensifier tube, which receives the x-ray pattern at a relatively large input face, and produces at an output face a corresponding but smaller inverted image whose brightness is substantially enhanced with respect to the brightness of the input face. Where such an image tube is used, the minified output is often viewed by a television camera and displayed on a monitor or recorded by a hard-copy film camera.

These known systems have several disadvantages. The scintillation screen, while simple and compact, produces only a relatively dim image which often must be viewed in a darkened room,' and is not suitable for some studies. The inverter type image intensifier tubes tend to be complex, expensive, bulky and quite heavy. Moreover, the image produced at the output face of the inverter type image intensifier tube is quite small, compared with the actual pattern of x-rays sensed at the input face of the tube and therefore a complex optical system is required to magnify and view the small output face.

Often it is desirable that a system have the inherent capability of performing both radiographic and fluoroscopic studies. Prior art systems designed to perform these functions have had to incorporate both the elements of the fluoroscopic systems as described above, as well as separate radiographic components, such as radiographic film and scintillation screen cassettes. Additionally, such systems have required apparatus for removably interposing each of the radiographic and fluoroscopic components separately in the x-ray path.

Apparatus for interposing a film cassette into the x-ray path to make a radiographic film exposure are known as spotfilmers or spotfilm devices. Spotfilmers generally include a cassette carriage assembly movable supported within a housing. The cassette carriage assembly supports and transports the film cassette to one of a plurality of positions within the housing. When the operator desires a film record of anatomy being viewed fluoroscopically, the film cassette is advanced into position in alignment with the anatomy being examined. The radiation level is momentarily increased to radiographic levels in order to properly expose the film. Spotfilm devices add to the complexity, weight and cost of the system.

More recently, some attempts have been made to reduce weight, bulk and complexity of x-ray systems by using panel electron tubes (sometimes known as "PET" scopes) as the primary x-ray detector for fluoroscopic imaging. A PET scope absorbs incident x-rays and converts them into a directly viewable, large area, real time light image. The light image corresponds to, and is approximately the same size as, the pattern of x-rays which causes its production. A PET scope is considerably lighter and more compact than an inverter type image intensifier tube, and produces a much larger image.

Panel electron tubes are image intensifiers. Key components are a vacuum tube, an input phosphor, and a high voltage cathode and anode, and an output phosphor. A large area x-ray image impinges on the input surface of the PET scope causing electrons to be ejected from the input phosphor. These electrons initially have little velocity, but are accelerated in a high voltage field existing between the anode and cathode. The electrons strike the output phosphor at relatively high velocity, resulting in an intensified light image corresponding to the x-ray image formed on the input face. Because the input phosphor and output phosphor are in close proximity to each other, large area spatial information inherent to the x-ray image which impinges on the input surface is well reproduced as a large area light image at its output phosphor. The close proximity of the input and output phosphor allows a compact image intensifier package.

It is desirable to have a method for making large film hard copies direct from the output of a large area image intensifier tube, such as the PET scope, thereby eliminating the need for the conventional spotfilmer apparatus.

Another motivation for making radiographic film exposures from a large area image intensifier such as a PET scope is the desire for making films at the low level radiation normally used for fluoroscopic work.

It has been proposed to utilize the output image from PET scopes not only in fluoroscopy, but also for producing hard copy radiographic film records of images produced by the scope. Such efforts, however, have been less than totally satisfactory because one cannot simply make a contact print using radiographic film laid on the output face of a PET scope and get a quality picture. The reason is that the image must be properly focused on the film. Such focusing requires a bulky, heavy and complex optical systems and means for moving components of the optical system in order to selectively optically couple the output face of the PET scope with the film. The optical system, including such elements as movable mirrors and lenses, must have its components distributed along a fairly long optical path in order to achieve proper focusing of the image. This required spacing in turn requires provision of relatively complex and lengthy mounting structure to achieve the desired positioning, particularly in view of the requirement for movability of the optical system depending on what type of imaging is being performed.

It is desirable, in such applications, that the optical coupling system be of relatively large aperture. Achieving large apertures with conventional glass lensing has several disadvantages. First, the larger the aperture, the heavier and more bulky must be the glass lenses employed. Moreover, optical aberrations increase with aperture, and tend to degrade the image. Due to the distances of optical transmission involved, the image produced at the output of the PET scope must be relatively bright, and this necessitates the application to the patient of a larger x-ray dose than may be preferred. Additionally, with conventional focusing apparatus, the field of focus is not flat, but rather is generally curved, which is undesirable. This curvature of the in-focus field becomes more severe at greater apertures. All these problems are exacerbated where, as here, a large angle of field is desired.

The above considerations relating to weight, bulk and complexity are particularly significant in applications where portable x-ray imaging equipment is needed, such as in field military applications and for domestic trauma treatment centres in which it is often desirable to rapidly move a relatively compact and light weight x-ray imaging system into the field.

It is an object of the present invention to provide an imaging system employing penetrative radiation in which these difficulties are overcome.

Accordingly, the present invention provides an imaging system comprising: a source of penetrative radiation; and means for producing a visible light image corresponding to the pattern of said penetrative radiation, characterised by a gradient refractive index lens array arranged to be positioned so that said visible light image is viewed through said lens array.

One imaging system in accordance with the present invention will now be described, by way of example, with reference to the accompanying drawings in which:-

Figure 1 is an end elevation of the imaging system;

Figure 2 is a side elevation of the system of Figure 1; and

Figure 3 is a detailed view of a portion of the system of Figures 1 and 2.

Referring to the drawings, the system S includes an x-ray tube 10 of known design operable as an x-ray source. The x-ray tube 10 directs a beam of x-rays, generally denoted at 12, through the body of a patient 14 when located on a patient support structure 16.

The system S also includes a panel electron tube (PET) scope 18. The PET scope receives the pattern of x-rays emanating through the patient's body. At an output face, generally designated as 20, a real time visible image is produced, light from which is generally denoted at 22. The visible image corresponds to and is of approximately the same size as the pattern of x-rays incident on the input face of PET scope 18.

The technology of panel type x-ray image intensifier tubes is known in the art, as is evidenced by, for example, US-A 4,255,666.

The PET scope is supported in alignment with the x-ray beam 12 by means of a supportive housing structure 24. The housing structure 24 also bears carriage structure 26, shown generally, whose design is within the ordinary skill in the art. The carriage structure 26 bears a gradient refractive index (GRIN) lens array 28, and a holder or cassette 30 suitable for accommodation a portion of light sensitive film.

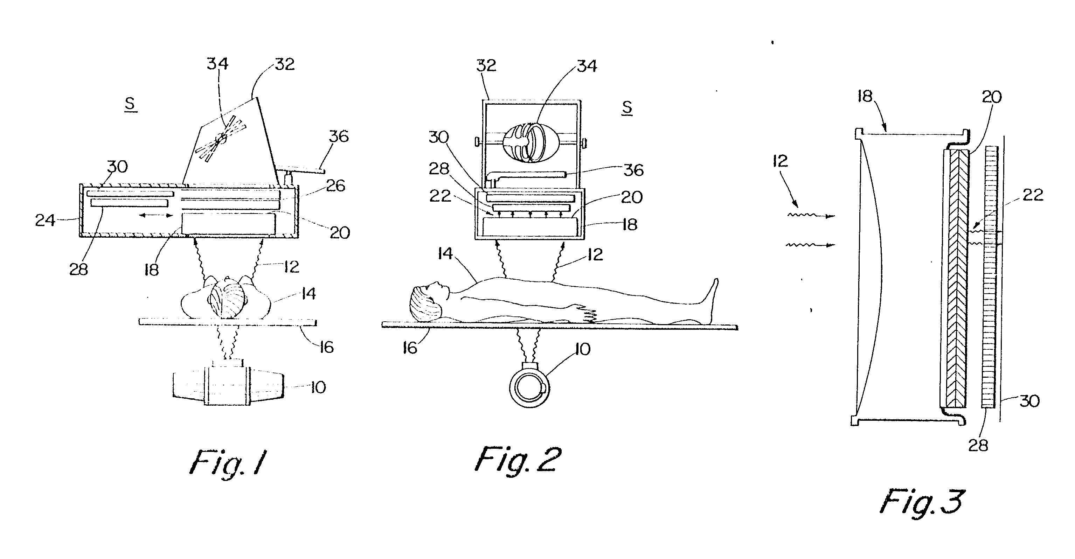

By means of manual or automatic application of force, the assembly including the GRIN lens array 28 and the cassette 30 can be moved in unison left and right as shown in Figure 1, into and out of alignment with the output face 20 of the PET scope 18.

The spacing maintained by virtue of the carriage structure 26, among the cassette 30, the GRIN lens array 28, and the output face 20 is such that, when the assembly of the GRIN lens 28 and cassette 30 is moved to the right, to align it with the output face 20, as in Figure 1, a particular spatial relationship is obtained. That is, the GRIN lens array 28 is spaced from the output face 20 of the PET scope such that its objective plane substantially coincides with the output face 20. The cassette 30 is spaced from the GRIN lens array 28 such that a portion of film, held in the cassette 30, is located substantially coincided with the image plane of the GRIN lens array 28.

General technology relating to GRIN lenses is described in the following publication: Sono, K., et al., "Graded-Index Rod Lens," Laser Focus Magazine, February, 1981, pgs. 70-74, advanced Technology Publications, Inc., 1001 Watertown Street, Newton, MA 02165.

Other GRIN lens technology is described in the following publication: "SELFOC Handbook", published by NSG American, Inc., a subsidiary of Nippon Sheet Glass Company Limited.

In the present invention, a suitable GRIN lens has been found to have a working distance of approximately 17mm. The working distances for GRIN lens are, generally speaking, the same on both sides of the lens.

In the preferred embodiment, the half (1/2) angle of field of a single SELFOC array lens is approximately 9°, and the desired aperture is approximately 3.5.

A preferable GRIN lens array has been found to be a Model SLA-09 GRIN lens, manufactured by NSG America Inc. of Somerset, New Jersey.

In the fluoroscopic examination mode, the PET scope is positioned over the x-ray tube, as shown in Figure 1. X-rays pass through the patient and the resulting x-ray image impinges on the input surface of the PET scope. The PET scope produces a large area light image 22 which is viewed directly or is viewed using a mirror viewer assembly generally designated at 32 in Figures 1 and 2. The PET scope image is a real time image produced with fluoro radiation exposure levels. Construction and design of the mirror viewer assembly 32 is described below.

The mirror viewer assembly includes two first surface mirrors 34, 36 positioned in a manner such that a reflected image from the PET scope can be easily viewed by a clinician. The angular position of the mirrors 34, 36 is adjustable to permit viewing of the reflected image from a plurality of angles in order to compensate height differences of the individuals operating the system.

When a clinician desires to make a hardcopy film of what is seen in the fluoro mode, the GRIN lens array 28 and film holder assembly 30, are manually or automatically moved into position over the PET scope and aligned therewith. A dark slide is provided in known fashion as part of the cassette 30 to removably cover the light sensitive film in the cassette or holder 30. The dark slide is of known construction. The dark slide is manually or automatically opened, and the GRIN lens array assembly reimages light 22 from the PET scope images onto the film. When imaging exposure is completed, the dark slide is then closed. The film holder is then removed from the housing 24 and can be processed at a convenient time in known fashion.

The film exposure process could be automated to produce a series of fairly rapid sequence films.

## Claims

1. An imaging system comprising: a source (10) of penetrative radiation; and means (18) for producing a visible light image (22) corresponding to the pattern of said penetrative radiation, characterised by a gradient refractive index lens array (28) arranged to be positioned so that said visible light image (22) is viewed through said lens array (28).

2. A system according to Claim 1 wherein: said source (10) of penetrative radiation is an x-ray source; said means (18) for producing comprises a panel electron tube having an input face facing said source (10); and said system further comprises: means (26) for supporting said lens array (28) in a position wherein its object plane is substantially coincident with an output face (20) of said panel electron tube (18); and means (26, 30) for positioning a portion of light sensitive film in the path of the light from said visible light image (22) after said light has passed through said lens array (28) so that said portion is substantially coincident with the image plane of said lens array (28).

3. A system according to Claim 2 wherein said means (26) for supporting said lens array (28) comprises: means for selectively removing said lens array (28) from the position wherein its object plane is substantially coincident with said output face (20) of said panel electron tube (18) to another position to permit direct viewing of said output face (20) of said panel electron tube (18).

4. A system according to Claim 2 or Claim 3 wherein said means for positioning (26, 30) said film comprises means for selectively removing said film from the position wherein it is substantially coincident with said image plane of said lens array (28) to permit direct viewing of said output face (20) of said panel electron tube (18).

5. A system according to any one of Claims 2 to 4 further comprising mirror viewer means (32) to permit viewing of a reflected image of said output face (20) of said panel electron tube (18).

6. A system according to Claim 5 wherein said mirror viewer means (32) is adjustable to permit viewing of said reflected image from a plurality of angles.

7. A system according to any one of Claims 2 to 6 further comprising means (30) for selectively preventing exposure of said film to light.

8. A system according to any preceding claim wherein the half angle of field defined by a single lens of said lens array (28) is approximately 9 degrees.

9. A system according to any preceding claim wherein said gradient refractive index lens array (28) has a working distance of approximately 17mm.

10 A system according to Claim 1 wherein: said source (10) of penetrative radiation is an x-ray source; said means (18) for producing comprises an image intensifier tube having an output face (20) and an input face, said input face facing said source (10) and said output face (20) having an area substantially the same as said input face; said lens array (28) has a cross-sectional area substantially the same as said output face (20); and said system further comprises: means (26) for movably supporting said lens array (28) in a position wherein its object plane is substantially coincident with said output face (20); means (26, 30) for positioning a portion of light sensitive film in the path of the light from said visible light image (22) after said light has passed through said lens array (28) so that said portion is substantially coincident with the image plane of said lens array (28); and means (26, 30) for selectively exposing said film to light produced at said output face (20) of said tube (18).

11. A system according to Claim 10 wherein said means (26) for movably supporting and said means (26, 30) for positioning comprise means for selectively removing said lens array (28) from the position wherein its object plane is substantially coincident with said output face (20) and said film from the position wherein it is substantially coincident with said image plane.

12. A system according to Claim 1 wherein: said source (10) of penetrative radiation is an x-ray source for propagating a beam (12) of radiation along a path; said means (18) for producing comprises an image intensifier tube (18) mounted for imposition in the path of said beam (12) and spaced from said source (10) to accommodate an object (14) therebetween; said image intensifier tube (18) has an input face for receiving the radiation which passes through said object (14) and an output face (20) for producing said visible light image (22) with a pattern corresponding to the pattern of said radiation which emerges from said object (14); said input face and said output face (20) have substantially the same area; said lens array (28) has a cross-sectional area substantially the same as said output face (20); and said system further includes: means (26) for supporting said lens array (28) in a position wherein its object plane is substantially coincident with said output face (20); and means (26, 30) for positioning a portion of light sensitive film in the path of the light from said visible light image (22) after said light has passed through said lens array (28) so that said portion is substantially coincident with the image plane of said lens array (28).

13. A system according to Claim 12 wherein said means (26) for supporting said lens array (28) comprises means for selectively removing said lens array (28) from the position wherein its object plane is substantially coincident with said output face (20) of said image intensifier tube (18) to another position to permit direct viewing of said output face (20).

14. A system according to Claim 12 wherein said means (26, 30) for positioning said film comprises means for selectively removing said film from the position wherein it is substantially coincident with said image plane of said lens array (28) to permit direct viewing of said output face (20).

*Fig.1*

*Fig.2*

*Fig.3*

0 265 130